# EUROPÄISCHE PATENTSCHRIFT

(11) **EP 1 694 487 B1**
(45) Veröffentlichungstag und Bekanntmachung des Hinweises auf die Patenterteilung: **24.02.2010**
(21) Anmeldenummer: 04803717.0
(22) Anmeldetag: 10.12.2004
(51) Int. Cl.: B29C 44/34

(54) **Verfahren zur Herstellung von expandierbare Styrolpolymergranulate**
Method of manufacturing expandable granules of polystyrene
Procédé de production de granules de polystyrene expansible

(30) Priorität: 12.12.2003 DE 10358798
(43) Veröffentlichungstag der Anmeldung: 30.08.2006
(73) Patentinhaber: BASF SE, 67056 Ludwigshafen (DE)
(72) Erfinder: HAHN, Klaus, 67281 Kirchheim (DE); EHRMANN, Gerd, 67146 Deidesheim (DE); RUCH, Joachim, 67157 Wachenheim (DE); ALLMENDINGER, Markus, 67149 Meckenheim (DE)
(86) Internationale Anmeldenummer: PCT/EP2004/014067
(87) Internationale Veröffentlichungsnummer: WO 2005/056268

(56) Entgegenhaltungen:
- EP-A2- 0 126 459
- WO-A-01/91983
- DE-A1- 10 226 749
- JP-A- 61 171 736
- US-A- 4 035 315
- US-A- 5 114 640
- PATENT ABSTRACTS OF JAPAN Bd. 1999, Nr. 02, 26. Februar 1999 (1999-02-26) -& JP 10 306173 A (SEKISUI PLASTICS CO LTD), 17. November 1998 (1998-11-17)

## Beschreibung

Die Erfindung betrifft ein Verfahren zur Herstellung von expandierbaren Styrolpolymergranulaten mit nahezu kugelförmiger Geometrie gemäß Anspruch 1.

Verfahren zur Herstellung von expandierbaren Styrolpolymeren, wie expandierbarem Polystyrol (EPS) durch Suspensionspolymerisation ist seit langem bekannt. Diese Verfahren haben den Nachteil, dass große Mengen Abwasser anfallen und entsorgt werden müssen. Die Polymerisate müssen getrocknet werden um Innenwasser zu entfernen. Außerdem führt die Suspensionspolymerisation in der Regel zu breiten Perlgrößenverteilungen, die aufwändig in verschiedene Perlfraktionen gesiebt werden müssen.

Weiterhin können expandierte und expandierbare Styrolpolymerisate mittels Extrusionsverfahren hergestellt werden. Hierbei wird das Treibmittel z.B. über einen Extruder in die Polymerschmelze eingemischt, durch eine Düsenplatte gefördert und zu Partikeln oder Strängen granuliert (US 3,817,669, GB 1,062,307, EP-B 0 126 459, US 5,000,891).

Die EP-A 668 139 beschreibt ein Verfahren zur wirtschaftlichen Herstellung von expandierbarem Polystyrolgranulat (EPS) wobei die treibmittelhaltige Schmelze mittels statischer Mischelemente in einer Dispergier-, Halte- und Abkühlstufe hergestellt und anschließend granuliert wird. Aufgrund der Abkühlung der Schmelze auf wenige Grad über der Erstarrungstemperatur ist die Abführung hoher Wärmemengen notwendig.

Um das Aufschäumen nach der Extrusion weitgehend zu verhindern, wurden verschiedene Verfahren für die Granulierung, wie Unterwassergranulierung (EP-A 305 862), Sprühnebel (WO 03/053651) oder Zerstäubung (US 6,093,750) vorgeschlagen.

Die WO 98/51735 beschreibt Graphitpartikel enthaltende expandierbare Styrolpolymere mit verringerter Wärmeleitfähigkeit, die durch Suspensionspolymerisation oder durch Extrusion in einem Zweischneckentextruder erhältlich sind. Aufgrund der hohen Scherkräfte in einem Zweischneckentextruder beobachtet man in der Regel einen signifikanten Molekulargewichtsabbau des eingesetzten Polymeren und/oder teilweise Zersetzung von zugegebenen Additiven, wie Flammschutzmittel.

Zur Erzielung optimaler Dämmeigenschaften und guter Oberflächen der Schaumstoffkörper ist die Zellzahl und Schaumstruktur, die sich beim Verschäumen der expandierbaren Styrolpolymeren (EPS) einstellt, von entscheidender Bedeutung. Die durch Extrusion hergestellten EPS-Granulaten lassen sich häufig nicht zu Schaumstoffen mit optimaler Schaumstruktur verschäumen.

Aufgrund unterschiedlicher Granulierarten und -bedingungen können bei der Granulierung zylindrische oder ellipsoide Granulatformen auftreten. Scharfkantige Stranggranulate zeigen ein schlechtes Rieselverhalten sowie Splitterung und Abrieb beim Transport, was sich nachteilig bei der Verarbeitung zu Schaumstoffformteilen auswirken kann. Bei starker Abweichung von der Kugelform kann die Verschweisung der vorgeschäumten Granulate und die Oberflächenstruktur der daraus hergestellten Schaumstoffformteile beeinträchtigt werden.

Aufgabe der Erfindung war es, den vorgenannten Nachteilen abzuhelfen, und nahezu kugelförmige, expandierbare Styrolpolymergranulate nach dem Schmelzeextrusionsverfahren herzustellen.

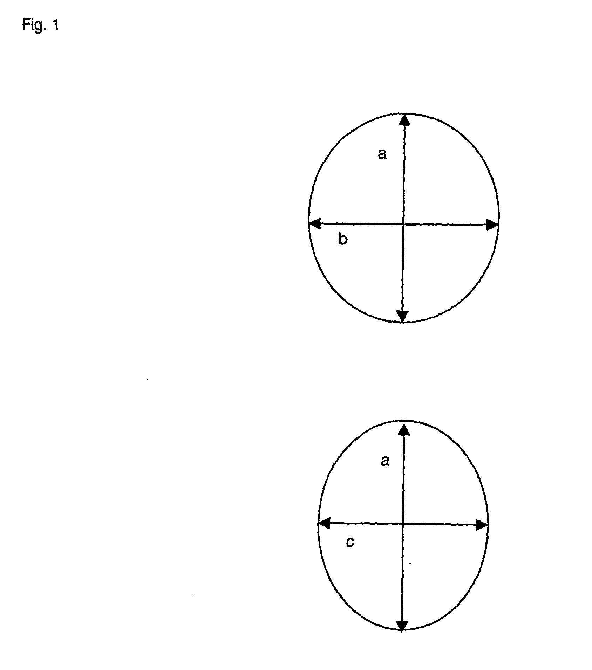

Demgemäß wurden expandierbare Styrolpolymergranulate, erhältlich durch Schmelzeextrusion mit nahezu kugelförmiger Geometrie mit einer längsten Ausdehnung (a) und zwei dazu senkrecht stehenden, kürzeren Ausdehnungen (b) und (c), dadurch gekennzeichnet, dass das die kürzeren Ausdehnungen (b) und (c) im Bereich von 0,3 bis 1,8 mm liegen und das Verhältnis γ der kürzesten Ausdehnung (c) zur längsten Ausdehnung (a) im Bereich von 0,8 bis 1 liegen. Die Ausdehnungen (a), (b) und (c) sind in Figur 1 schematisch dargestellt.

Bevorzugt liegen die kürzeren Ausdehnungen (b) und (c) im Bereich von 0,4 bis 1,2 mm liegen und das Verhältnis γ der kürzesten Ausdehnung (c) zur längsten Ausdehnung (a) im Bereich von 0,82 bis 0,95.

Die erfindungsgemäßen Styrolpolymergranulate werden durch die Schmelzeextrusion und anschließender Unterwassergranulierung hergestellt, wobei die Schmelzetemperatur und Schnittfrequenz zur Einstellung der gewünschten Geometrie variiert, und mit 20-50 Gew.-% Talkum als Füllstoff eingemischt, wird.

Es hat sich gezeigt, dass Styrolpolmere mit Molekulargewichten M_{w} von unter 160.000 bei der Granulierung zu Polymerabrieb führen. Bevorzugt weist das expandierbare Styrolpolymer ein Molekulargewicht im Bereich von 190.000 bis 400.000 g/mol, besonders bevorzugt im Bereich von 220.000 bis 300.000 g/mol auf. Aufgrund des Molekulargewichtsabbaus durch Scherung und/oder Temperatureinwirkung liegt das Molekulargewicht des expandierbaren Polystyrols in der Regel etwa 10.000 g/mol unter dem Molekulargewicht des eingesetzten Polystyrols.

Um möglichst kleine Granulatpartikel zu erhalten, sollte die Strangaufweitung nach dem Düsenaustritt möglichst gering sein. Es hat sich gezeigt, dass die Strangaufweitung unter anderem durch die Molekuargewichtsverteilung des Styrolpolymeren beeinflusst werden kann. Das expandierbare Styrolpolymer sollte daher bevorzugt eine Molekulargewichtsverteilung mit einer Uneinheitlichkeit M_{w}/Mₙ von höchstens 3,5, besonders bevorzugt im Bereich von 1,5 bis 2,8 und ganz besonders bevorzugt im Bereich von 1,8 bis 2,6 aufweisen.

Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Styrol-a-Methstyrol-copolymere, Acrylnitril-Butadien-Styrolpolymerisate (ABS), Styrol-Acrylnitril (SAN) Acrylnitril-Styrol-Acrylester (ASA), Methyacrylat-Butadien-Styrol (MBS), Methylmethacrylat-Acrylnitril-Butadien-Styrol (MABS)- polymerisate oder Mischungen davon oder mit Polyphenylenether (PPE) eingesetzt.

Die genannten Styrolpolymeren können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylentherephtalat (PET) oder Polybutylenterephtalat (PBT), Polyethersulfonen (PES), Polyetherketonen oder Polyethersulfiden (PES) oder Mischungen davon in der Regel in Anteilen von insgesamt bis maximal 30 Gew.-%, bevorzugt im Bereich von 1 bis 10 Gew.-%, bezogen auf die Polymerschmelze, abgemischt werden. Desweiteren sind Mischungen in den genannten Mengenbereichen auch mit z. B hydrophob modifizierten oder funktionalisierten Polymeren oder Oligomeren, Kautschuken, wie Polyacrylaten oder Polydienen, z. B. Styrol-Butadien-Blockcopolymeren oder biologisch abbaubaren aliphatischen oder aliphatisch/aromatischen Copolyestern möglich.

Als Verträglichkeitsvermittler eignen sich z.B. Maleinsäureanhydrid-modifizierte Styrolcopolymere, Epoxidgruppenhaltige Polymere oder Organosilane.

Der Styrolpolymerschmelze können auch Polymerrecyklate der genannten thermoplastischen Polymeren, insbesondere Styrolpolymere und expandierbare Styrolpolymerer (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-%.

Die treibmittelhaltige Styrolpolymerschmelze enthält in der Regel eine oder mehrere Treibmittel in homogener Verteilung in einem Anteil von insgesamt 2 bis 10 Gew.-% bevorzugt 3 bis 7 Gew.-%, bezogen auf die treibmittelhaltige Styrolpolymerschmelze. Als Treibmittel, eigenen sich die üblicherweise in EPS eingesetzten physikalische Treibmittel, wie aliphatischen Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, iso-Pentan, n-Pentan eingesetzt.

Zur Verbesserung der Verschäumbarkeit können feinverteilte Innenwassertröpfchen in die Styrolpolymermatirx eingebracht werden. Dies kann beispielsweise durch die Zugabe von Wasser in die aufgeschmolzene Styrolpolymermatrix erfolgen. Die Zugabe des Wassers kann örtlich vor, mit oder nach der Treibmitteldosierung erfolgen. Eine homogene Verteilung des Wassers kann mittels dynamischen oder statischen Mischern erreicht werden.

In der Regel sind 0 bis 2, bevorzugt 0,05 bis 1,5 Gew.-% Wasser, bezogen auf das Styrolpolymer, ausreichend.

Expandierbare Styrolpolymere (EPS) mit mindestens 90% des Innenwassers in Form von Innenwassertröpfchen mit einem Durchmesser im Bereich von 0,5 bis 15 µm bilden beim Verschäumen Schaumstoffe mit ausreichender Zellzahl und homogener Schaumstruktur.

Die zugesetzte Treibmittel- und Wassermenge wird so gewählt, dass die expandierbaren Styrolpolymeren (EPS) ein Expansionsvermögen α, definiert als Schüttdichte vor dem Verschäumen/Schüttdichte nach dem Verschäumen höchstens 125 bevorzugt 25 bis 100 aufweisen.

Die erfindungsgemäßen expandierbaren Styrolpolymergranulate (EPS) weisen in der Regel eine Schüttdichte von höchstens 700 g/l bevorzugt im Bereich von 590 bis 660 g/l auf. Bei Verwendung von Füllstoffen können in Abhängigkeit von der Art und Menge des Füllstoffes Schüttdichten im Bereich von 590 bis 1200 g/l auftreten.

Des weiteren können der Styrolpolymerschmelze Additive, Keimbildner, Füllstoffe, Weichmacher, Flammschutzmittel, lösliche und unlösliche anorganische und/oder organische Farbstoffe und Pigmente, z.B. IR-Absorber, wie Ruß, Graphit oder Aluminiumpulver gemeinsam oder räumlich getrennt, z.B. über Mischer oder Seitenextruder zugegeben werden. In der Regel werden die Farbstoffe und Pigmente in Mengen im Bereich von 0,01 bis 30, bevorzugt im Bereich von 1 bis 5 Gew.-% zugesetzt. Zur homogenen und mikrodispersen Verteilung der Pigmente in dem Styrolpolymer kann es insbesondere bei polaren Pigmenten zweckmäßig sein ein Dispergierhilfsmittel, z.B. Organosilane, epoxygruppenhaltige Polymere oder Maleinsäureanhydrid-gepfropfte Styrolpolymere, einzusetzen. Bevorzugte Weichmacher sind Mineralöle, niedermolekulare Styrolpolymere, Phtalate, die in Mengen von 0,05 bis 10 Gew.-%, bezogen auf das Styrolpolymerisat, eingesetzt werden können.

Zur Herstellung der erfindungsgemäßen expandierbaren Styrolpolymerisate wird das Treibmittel in die Polymerschmelze eingemischt. Das Verfahren umfasst die Stufen a) Schmelzerzeugung, b) Mischen c) Kühlen d) Fördern und e) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind z.B.:
a) Polymerisationsreaktor - statischer Mischer/Kühler - Granulator
b) Polymerisationsreaktor - Extruder - Granulator
c) Extruder - statischer Mischer - Granulator
d) Extruder - Granulator

Weiterhin kann die Anordnung Seitenextruder zur Einbringung von Additiven, z.B. von Feststoffen oder thermisch empfindlichen Zusatzstoffen aufweisen.

Die treibmittelhaltige Styrolpolymerschmelze wird in der Regel mit einer Temperatur im Bereich von 140 bis 300°C, bevorzugt im Bereich von 160 bis 240°C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Polystyrolschmelze beheizt. Bevorzugt liegt die Temperatur der Düsenplatte im Bereich von 20 bis 100°C über der Temperatur der treibmittelhaltigen Polystyrolschmelze. Dadurch werden Polymerablagerungen in den Düsen verhindert und eine störungsfreie Granulierung gewährleistet.

Um marktfähige Granulatgrößen zu erhalten sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich 0,4 bis 1,4 mm gezielt einstellen.

Die Strangaufweitung kann außer über die Molekulargewichtsverteilung durch die Düsengeometrie beeinflusst werden. Die Düsenplatte weist bevorzugt Bohrungen mit einem Verhältnis UD von mindestens 2 auf, wobei die Länge (L) den Düsenbereich, dessen Durchmesser höchstens dem Durchmesser (D) am Düsenaustritt entspricht, bezeichnet. Bevorzugt liegt das Verhältnis UD im Bereich von 3 - 20.

Im allgemeinen sollte der Durchmesser (E) der Bohrungen am Düseneintritt der Düsenplatte mindestens doppelt so groß wie der Durchmesser (D) am Düsenaustritt sein.

Eine Ausführungsform der Düsenplatte weist Bohrungen mit konischem Einlauf und einem Einlaufwinkel α kleiner 180°, bevorzugt im Bereich von 30 bis 120° auf. In einer weiteren Ausführungsform besitzt die Düsenplatte Bohrungen mit konischem Auslauf und einen Auslaufwinkel β kleiner 90°, bevorzugt im Bereich von 15 bis 45°. Um gezielte Granulatgrößenverteilungen der Styrolpolymeren zu erzeugen kann die Düsenplatte mit Bohrungen unterschiedlicher Austrittsdurchmesser (D) ausgerüstet werden. Die verschiedenen Ausführungsformen der Düsengeometrie können auch miteinander kombiniert werden.

Ein besonders bevorzugtes Verfahren zur Herstellung von expandierbaren Styrolpolymeren mit einem Molekulargewicht Mw von mehr als 160.000 g/mol, umfasst die Schritte
a) Polymerisation von Styrolmonomer und gegebenenfalls copolymersierbaren Monomeren,
b) Entgasungung der erhaltenen Styrolpolymerschmelze,
c) Einmischen des Treibmittels und gegebenenfalls Additiven, in die Styrolpolymerschmelze mittels statischen oder dynamischen Mischer bei einer Temperatur von mindestens 150°C, bevorzugt 180 - 260°C,
d) Kühlen der treibmittelhaltigen Styrolpolymerschmelze auf eine Temperatur, die mindestens 120°C, bevorzugt 150 - 200°C beträgt,
e) Austrag durch eine Düsenplatte mit Bohrungen, deren Durchmesser am Düsenaustritt höchstens 1,5 mm beträgt und
f) Granulieren der treibmittelhaltigen Schmelze.

In Schritt f) kann die Granulierung direkt hinter der Düsenplatte unter Wasser bei einem Druck im Bereich von 1 bis 25 bar, bevorzugt 5 bis 15 bar erfolgen.

Aufgrund der Polymerisation in Stufe a) und Entgasung in Stufe b) steht für die Treibmittelimpägnierung in Stufe c) direkt eine Polymerschmelze zur Verfügung und ein Aufschmelzen von Styrolpolymeren ist nicht notwendig. Dies ist nicht nur wirtschaftlicher, sondern führt auch zu expandierbaren Styrolpolymeren (EPS) mit niedrigen Styrolmonomergehalten, da die mechanischen Schereinwirkung im Aufschmelzbereich eines Extruders, die in der Regel zu einer Rückspaltung von Monomeren führt, vermieden wird. Um den Styrolmonomerengehalt niedrig zu halten, insbesondere unter 500 ppm mit Styrolmomomergehalten, ist es ferner zweckmäßig, den mechanischen und thermischen Energieeintrag in allen folgenden Verfahrensstufen so gering wie möglich zu halten. Besonders bevorzugt werden daher Scherraten unter 50 sec, bevorzugt 5 bis 30/sec, und Temperaturen unter 260°C sowie kurze Verweilzeiten im Bereich von 1 bis 20, bevorzugt 2 bis 10 Minuten in den Stufen c) bis e) eingehalten. Besonders bevorzugt werden ausschließlich statische Mischer und statische Kühler im gesamten Verfahren eingesetzt. Die Polymerschmelze kann durch Druckpumpen, z.B. Zahnradpumpen gefördert und ausgetragen werden.

Eine weitere Möglichkeit zur Verringerung des Styrolmonomerengehaltes und/oder Restlösungsmittel wie Ethylbenzol besteht darin, in Stufe b) eine Hochentgasung mittels Schleppmitteln, beispielsweise Wasser, Stickstoff oder Kohlendioxid, vorzusehen oder die Polymerisationsstufe a) anionisch durchzuführen. Die anionische Polymerisation von Styrol führt nicht nur zu Styrolpolymeren mit niedrigem Styrolmonomeranteil, sondern gleichzeitig zur geringen Styrololigomerenanteilen.

Zur Verbesserung der Verarbeitbarkeit können die fertigen expandierbaren Styrolpolymergranulate durch Glycerinester, Antistatika oder Antiverklebungsmittel beschichten werden.

Die erfindungsgemäßen expandierbaren Styropolymergranulate weisen eine geringe Abweichung von der Kugelform auf und lassen sich daher pneumatisch ohne Abrieb sehr gut fördern. Sie können zur Herstellung von Partikelschaumformteilen in einem ersten Schritt mittels Heißluft oder Wasserdampf zu Schaumpartikeln mit einer Dichte im Bereich von 8 bis 100 g/l vorschäumt und in einem 2. Schritt in einer geschlossenen Form verschweißt.

### Beispiele:

### Beispiele 1 - 3

In eine Schmelze aus Standart-Polystyrol (GPPS) der BASF Aktiengesellschaft mit einer Viskositätszahl VZ von 75 ml/g (M_{w}= 195 000, M_{w}/Mₙ = 2,7) wurde zusätzlich 6 Gew.-% n-Pentan und die in Tabelle 1 angegebene Menge Talkum, jeweils bezogen auf die Polymerschmelze eingemischt. Die treibmittelhaltige Schmelzemischung wurde von ursprünglich 260 auf 187 °C abgekühlt und bei einem Durchsatz von 100 kg/h durch eine Düsenplatte mit 300 Bohrungen (Durchmesser der Düse 0,4 mm) gefördert. Mit Hilfe einer druckbeaufschlagten Unterwassergranulierung wurden kompakte, nahezu kugelförmige Granulate mit enger Größenverteilung hergestellt. Schnittfrequenz und Schmelzetemperatur direkt vor der Düse sowie die Geometrie der Granulate sind in Tabelle 1 zusammengefasst. Die Abmessungen (a), (b) und (c) der Granulate wurden mit Hilfe eines Lichtmikroskopes ermittelt. Hierzu wurden die Granulate zunächst ausgelegt und die Abmessungen (a) und (b) bestimmt. Anschließend wurden die Granulate aufgestellt und die Abmessung (b) und (c) ermittelt.

Diese Granulate wurden in strömendem Wasserdampf zu Schaumstoffperlen mit 20 g/l vorgeschäumt, 12 Stunden zwischengelagert und anschließend in gasdichten Formen mit Wasserdampf zu Schaumstoffkörpern verschweißt.

Die Oberflächengüte wurde wie in Tabelle 1 zusammengestellt beurteilt.

### Vergleichsversuch

Der Vergleichsversuch wurde wie Beispiel 2 aber ohne Talkum als Füllstoff durchgeführt.

**Tabelle 1:**

| Bsp. | Talkum [Gew.-%] | Schmelzetemp. [°C] | Schnittfrequenz [Hz] | a [mm] | b [mm] | c [mm] | Y | Oberflächengüte |
|---|---|---|---|---|---|---|---|---|
| V | - | 180 | 1180 | 1210 | 945 | 700 | 0,58 | zufriedenstellend |
| 1 | - | 187 | 733 | 1324 | 1272 | 1110 | 0,84 | gut |
| 2 | 20 | 180 | 1180 | 1496 | 1342 | 1240 | 0,83 | gut |
| 3 | 30 | 180 | 1180 | 1186 | 1064 | 1074 | 0,91 | gut |

## Patentansprüche

1. Verfahren zur Herstellung von expandierbaren Styrolpolymergranulaten mit nahezu kugelförmiger Geometrie umfassend die Schritte
a) Einmischen eines organischen Treibmittels und Füllstoff in die Polymerschmelze mittels statischer oder dynamischer Mischer bei einer Temperatur von mindestens 150°C,
b) Kühlen der treibmittel- und Füllstoff-haltigen Polymerschmelze auf eine Temperatur von mindestens 120°C
c) Austrag durch eine Düsenplatte mit Bohrungen, deren Durchmesser am Düsenaustritt höchstens 1,5 mm beträgt bei einer Temperatur im Bereich von 160 bis 240°C und
d) Granulieren der treibmittel- und füllstoff- haltigen Polymerschmelze direkt hinter der Düsenplatte unter Wasser bei einem Druck im Bereich von 1 bis 20 bar, **gekennzeichnet dadurch, dass** im Schritt a 20-50 Gewichtsprozent Talkum als Füllstoff eingemischt, und dass die Schnittfrequenz so eingestellt wird, dass die Styrolpolymergranulate eine längste Ausdehnung (a) und zwei dazu senkrecht stehende, kürzere Ausdehnungen (b) und (c) aufweisen und die kürzeren Ausdehnungen (b) und (c) im Bereich von 0,3 bis 1,8 mm liegen und das Verhältnis Y der kürzesten Ausdehnung (c) zur längsten Ausdehnung (a) im Bereich von 0,8 bis 0,95 liegt..

2. Verfahren nach Anspruch 1, **dadurch gekennzeichnet, dass** das die kürzeren Ausdehnungen (b) und (c) im Bereich von 0,4 bis 1,2 mm liegen und das Verhältnis Y der kürzesten Ausdehnung (c) zur längsten Ausdehnung (a) im Bereich von 0,82 bis 0,95 liegen.

3. Verfahren nach Anspruch 1 oder 2, **dadurch gekennzeichnet, dass** das Styrolpolymere des expandierbaren Styrolpolymergranulates ein gewichtsmittleres Molekulargewicht im Bereich von 160.000 bis 400.000 g/mol aufweist.

4. Verfahren nach einem der Ansprüche 1 bis 3, **dadurch gekennzeichnet**, das die Schüttdichte der Styrolpolymergranulate im Bereich von 700 bis 1200 g/l liegt.

5. Verfahren nach einem der Ansprüche 1 bis 5, **dadurch gekennzeichnet, dass** die expandierbaren Styrolpolymergranulate 3 bis 7 Gew.-% des organischen Treibmittels enthalten.

## Claims

1. A process for preparing expandable styrene polymer granules having virtually spherical geometry, comprising the steps of
a) incorporating an organic blowing agent and filler into the polymer melt by means of static or dynamic mixers at a temperature of at least 150°C,
b) cooling the blowing agent- and filler-containing polymer melt to a temperature of at least 120°C
c) discharging through a die plate having drillholes whose diameter at the die exit is at most 1.5 mm at a temperature in the range from 160 to 240°C and
d) granulating the blowing agent- and filler-containing polymer melt directly downstream of the die plate under water at a pressure in the range from 1 to 20 bar, wherein, in step a, 20-50 percent by weight of talc are incorporated as filler, and wherein the cutting frequency is adjusted such that the styrene polymer granules have a longest dimension (a) and two shorter dimensions (b) and (c) perpendicular thereto, and the shorter dimensions (b) and (c) are in the range from 0.3 to 1.8 mm and the ratio γ of the shortest dimension (c) to the longest dimension (a) is in the range from 0.8 to 0.95.

2. The process according to claim 1, wherein the shorter dimensions (b) and (c) are in the range from 0.4 to 1.2 mm and the ratio γ of the shortest dimension (c) to the longest dimension (a) is in the range from 0.82 to 0.95.

3. The process according to claim 1 or 2, wherein the styrene polymer of the expandable styrene polymer granule has a weight-average molecular weight in the range from 160 000 to 400 000 g/mol.

4. The process according to any of claims 1 to 3, wherein the bulk density of the styrene polymer granules is in the range from 700 to 1200 g/l.

5. The process according to any of claims 1 to 4, wherein the expandable styrene polymer granules contain from 3 to 7% by weight of the organic blowing agent.

## Revendications

1. Procédé de fabrication de granulats de polymère de styrène expansibles d'une géométrie presque ronde, comprenant les étapes suivantes:
a) mélange d'un agent gonflant organique et d'une charge dans la masse fondue polymère au moyen d'un mélangeur statique ou dynamique à une température d'au moins 150 °C,
b) refroidissement de la masse fondue polymère contenant l'agent gonflant et la charge à une température d'au moins 120 °C,
c) déchargement par une plaque à buses contenant des alésages dont le diamètre à la sortie des buses est au plus de 1,5 mm, à une température dans la plage allant de 160 à 240 °C, et
d) granulation de la masse fondue polymère contenant l'agent gonflant et la charge directement après la plaque à buses sous de l'eau à une pression dans la plage allant de 1 à 20 bars, **caractérisé en ce que** 20 à 50 pourcent en poids de talc est incorporé en tant que charge à l'étape a), et **en ce que** la fréquence de découpe est ajustée de manière à ce que les granulats de polymère de styrène présentent une dimension la plus longue (a) et deux dimensions plus courtes (b) et (c), perpendiculaires à celle-ci, les dimensions (b) et (c) plus courtes étant dans la plage allant de 0,3 à 1,8 mm et le rapport γ entre la dimension la plus courte (c) et la dimension la plus longue (a) étant dans la plage allant de 0,8 à 0,95.

2. Procédé selon la revendication 1, **caractérisé en ce que** les dimensions plus courtes (b) et (c) sont dans la plage allant de 0,4 à 1,2 mm et **en ce que** le rapport γ entre la dimension la plus courte (c) et la dimension la plus longue (a) est dans la plage allant de 0,82 à 0,95.

3. Procédé selon la revendication 1 ou 2, **caractérisé en ce que** le polymère de styrène du granulat de polymère de styrène expansible présente un poids moléculaire moyen en poids dans la plage allant de 160 000 à 400 000 g/mol.

4. Procédé selon l'une quelconque des revendications 1 à 3, **caractérisé en ce que** la densité apparente des granulats de polymère de styrène est dans la plage allant de 700 à 1 200 g/l.

5. Procédé selon l'une quelconque des revendications 1 à 4, **caractérisé en ce que** les granulats de polymère de styrène expansibles contiennent 3 à 7 % en poids de l'agent gonflant organique.
